# EUROPÄISCHE PATENTSCHRIFT

(11) **EP 4 150 423 B1**
(45) Veröffentlichungstag und Bekanntmachung des Hinweises auf die Patenterteilung: **22.05.2024**
(21) Anmeldenummer: 21739569.8
(22) Anmeldetag: 21.06.2021
(51) Int. Cl.: G05D 1/00, B25J 9/16, G05B 19/418

(54) **ANPASSEN EINER FEHLERSICHEREN ÜBERWACHUNG IN EINER INDUSTRIELLEN AUTOMATISIERUNGSANLAGE**
ADAPTATION OF FAIL-SAFE MONITORING IN AN INDUSTRIAL AUTOMATION SYSTEM
AJUSTEMENT DE LA SURVEILLANCE PROTÉGÉE CONTRE LES ERREURS DANS UNE INSTALLATION D'AUTOMATISATION INDUSTRIELLE

(30) Priorität: 08.07.2020 EP 20184809
(43) Veröffentlichungstag der Anmeldung: 22.03.2023
(73) Patentinhaber: Siemens Aktiengesellschaft, 80333 München (DE)
(72) Erfinder: ARZICH, Martin, 90475 Nürnberg (DE); GRAF, Rene, 90513 Zirndorf (DE)
(74) Vertreter: Siemens Patent Attorneys
(86) Internationale Anmeldenummer: PCT/EP2021/066793
(87) Internationale Veröffentlichungsnummer: WO 2022/008214

(56) Entgegenhaltungen:
- EP-A2- 3 467 601
- US-A1- 2019 094 873
- US-A1- 2020 101 971

## Beschreibung

Die Erfindung betrifft ein Verfahren zum Anpassen einer fehlersicheren Überwachung in einer industriellen Automatisierungsanlage sowie ein Sicherheitssystem einer mobilen Komponente einer industriellen Automatisierungsanlage.

In modernen Produktionsanlagen wird das klassische Fließband immer öfter durch mobile Transportmittel ersetzt, die als FTS (Fahrerloses Transport System) oder englisch AGV (Automated Guided Vehicle) bezeichnet werden. Diese Fahrzeuge bewegen sich meist entlang vorgegebener Bahnen, die durch farbige Markierungen auf dem Boden oder in den Boden eingelassene induktive oder kapazitive Spurführungen gelenkt werden. Moderne Fahrzeuge können auch sensorgestützt navigieren, so dass die Bahnen quasi nur virtuell vorliegen und die Fahrzeuge sich mittels verschiedener Sensoren in der Umgebung orientieren. Diese frei navigierenden Fahrzeuge, die im Gegensatz zu den spurgeführten auch dynamisch um Hindernisse herumfahren können, nennt man AMR (Autonomer Mobiler Roboter).

Ein bevorzugtes Sensorsystem für AGV oder AMR sind Laserscanner, die mittels Laufzeitmessung, seltener auch mittels Phasenverschiebung, eines Laserstrahls die Umgebung vermessen. Der Laserstrahl wird über einen rotierenden Spiegel gedreht, so dass ein großer Erfassungsbereich entsteht, typischerweise 180 oder sogar 270 Grad. Die Laserscanner werden in erster Linie als Sicherheitseinrichtung verwendet, da sie intern fehlersicher aufgebaut sind. Für diesen Zweck werden dem Scanner definierte Felder mitgegeben, die er auf Verletzung überwacht und dies per fehlersicherem Ausgangssignal oder fehlersicherer Kommunikation einer überlagerten, ebenfalls fehlersicheren Steuerung mitteilt.

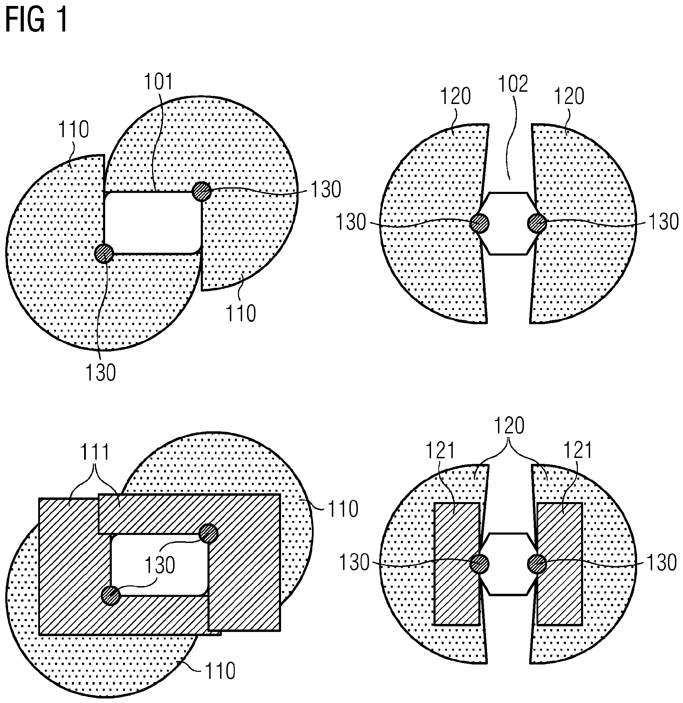

Figur 1 zeigt die typische Verwendung von Laserscannern bei AGV, links für ein rechteckiges AGV 101, bei dem auch die Seiten überwacht werden müssen, rechts für ein eher rotationssymmetrisches AGV 102, das beispielsweise aufgrund seiner differentiellen Kinematik nur vor oder zurück fahren sowie sich auf der Stelle drehen kann, so dass keine vollumfängliche Absicherung zu allen Seiten hin notwendig ist. Gepunktet sind jeweils die von einem jeweiligen Laserscanner 130 überwachbaren Bereiche 110, 120 eingezeichnet, beispielsweise maximal überwachbare Bereiche.

In den unteren Darstellungen der Figur 1 sind schraffiert auch mögliche Überwachungsbereiche oder Sicherheitsfelder 111, 121, eingezeichnet, die zu einer Verlangsamung oder sogar dem Anhalten des jeweiligen AGVs führen.

Neben der Verwendung an mobilen Fahrzeugen werden die Laserscanner auch an stationären Maschinen eingesetzt, um fehlersicher zu erkennen, dass beispielsweise ein Mensch sich genähert hat, und um die Maschine dementsprechend zur Gefährdungsvermeidung ganz oder teilweise abzuschalten. Die Laserscanner können somit ähnlich wie Lichtvorhänge oder Lichtgitter mechanische Absperrungen mit fehlersicheren Türkontakten ersetzen.

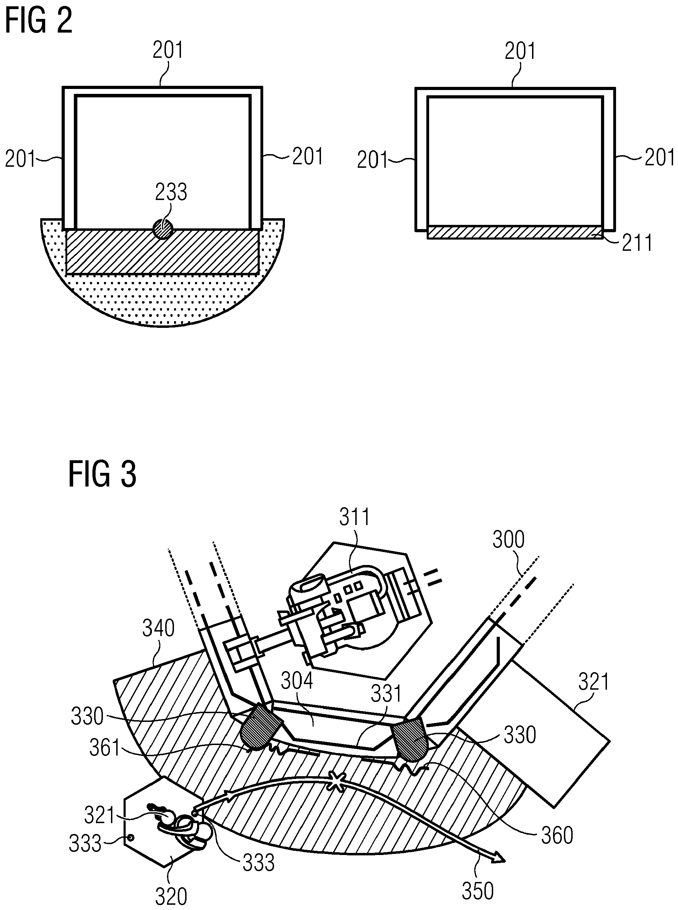

Figur 2 zeigt eine aus dem Stand der Technik bekannte Verwendung von Laserscannern und Lichtvorhang bei Maschinen. Dabei sind drei Seiten mit mechanischen Lösungen 201 abgesichert und die vierte Seite mit einem Laserscanner 233 oder einem Lichtvorhang 211, damit dadurch Material oder Produkte in die Maschine hineingelegt oder aus dieser entnommen werden können. Bei der Verwendung eines Lichtvorhangs muss zusätzlich gewährleistet sein, dass die Maschine schnell genug abschaltet, wenn dieser verletzt wird. Daher wird teilweise eine Kombination beider beschriebenen optischen Sicherheitseinrichtungen verwendet, um mit dem Laserscanner die Annäherung eines Menschen zu erkennen, die Maschine, beispielsweise einen Roboter, auf eine sichere Geschwindigkeit zu verlangsamen, und mit der Lichtschranke die endgültige Abschaltung einzuleiten, die aufgrund der zuvor erfolgten Verlangsamung auch schnell genug erfolgt.

Bei einer Verletzung des Laserscanners durch eine an der Maschine vorbeilaufende Person wird die Maschine nur verlangsamt, ohne dass es zu einem Produktionsstopp kommen muss.

In der zu Beginn erwähnten modernen Produktionsanlage kommen oftmals beide Verwendungen zusammen, sprich die Maschinen erkennen per Laserscanner die Annäherung eines Menschen und die AGVs liefern Material oder das Produktionsgut an die Maschinen an. Ob spurgeführt oder frei navigierend spielt für die weitere Betrachtung dabei keine Rolle.

Bislang löst ein AGV genauso wie ein Mensch die Sicherheitseinrichtung einer anderen, insbesondere stationären Maschine, insbesondere einen Laserscanner und/oder Lichtvorhang, aus und diese verlangsamt damit den Bewegungsablauf oder schaltet komplett ab. Soll beispielsweise ein Werkstück bearbeitet werden, ohne dass dieses von dem AGV in die Maschine umgeladen wird, entsteht eine Blockade, da die Maschine aufgrund der Verletzung der Sicherheitseinrichtung nicht arbeiten kann, wenn das AGV vor oder in ihr steht.

Derzeit werden daher unter anderem Maschine verwendet, die keine berührungslosen Sicherheitseinrichtungen wie Laserscanner oder Lichtgitter aufweisen, sondern mechanische wie Zäune oder Tore, die für die Ein- und Ausfahrt des AGV geöffnet, aber während der Bearbeitung durch die Maschine geschlossen sein müssen. Dabei muss mittels anderer zusätzlicher Sensorik oder Maßnahmen sichergestellt werden, dass kein Mensch parallel zum AGV die Maschine betreten hat oder betreten kann. Dies ist aufwändig und insbesondere schwer zu realisieren, da der Mensch zertifiziert fehlersicher als Störobjekt erkannt werden muss.

Ferner werden bislang Bearbeitungsschritte so ausgeführt, dass ein Werkstück vom AGV in die Maschine umgeladen wird, so dass das AGV sich wieder aus dem Erfassungsbereich der Laserscanner der Maschinen entfernen kann. Dies erfordert aber zum einen die entsprechende Mechanik in der Maschine und verlängert zum anderen die Produktionszeit, da die Maschine während des Umladens stillstehen muss. Ebenso muss je nach mechanischer Ausführung auch hier gewährleistet sein, dass kein Mensch zusammen mit dem AGV die Maschine betritt, aber im Gegensatz zu diesem nicht wieder verlässt.

Aus der US 2020/010101971 A1 ist bereits ein AGV bekannt, welcher mit einem Mechanismus zur Vermeidung von Kollisionen in einem definierten Raum, wie beispielsweise einem Warenlager. Es ist eine Kommunikation vorgesehen mit deinem Controller (bspw. zur Steuerung eines Krans) und mit anderen AGV zur Positionsbestimmung.

Vor diesem Hintergrund ist es eine Aufgabe der vorliegenden Erfindung, eine verbesserte Sicherheitsüberwachung für zwischen Komponenten einer industriellen Automatisierungsanlage verteilte Automatisierungsaufgaben bereitzustellen. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zum Anpassen einer fehlersicheren Überwachung in einer industriellen Automatisierungsanlage, wobei mittels eines Sensors einer mobilen Komponente der industriellen Automatisierungsanlage fehlersicher eine Pose der mobilen Komponente relativ zu einer weiteren Komponente der industriellen Automatisierungsanlage bestimmt wird, wobei eine kommunikative und fehlersichere Kopplung zwischen der mobilen Komponente und der weiteren Komponente aufgebaut wird, und wobei bei erfolgreicher Kopplung ein Überwachungsbereich der mobilen Komponente angepasst wird.

Unter dem Begriff der Fehlersicherheit wird in der vorliegenden Anmeldung die Einhaltung der Vorgaben verstanden, welche an funktional sichere Systeme, insbesondere integrierte Fertigungssysteme, gestellt werden. Solche Anforderungen an die funktionale Sicherheit werden beispielsweise im industriellen Umfeld durch die Vorschriften der Normenreihe EN 61508 Funktionale Sicherheit sicherheitsbezogener elektrischer, elektronischer, programmierbarer elektronischer Systeme definiert. Dabei sind verschiedene Mechanismen, wie beispielsweise redundante Datenverarbeitung, zur Einhaltung der Anforderungen hinsichtlich der funktionalen Sicherheit bekannt. Die DIN EN ISO 11161 "Sicherheit von Maschinen - Integrierte Fertigungssysteme - Grundlegende Anforderungen" behandelt Sicherheitsaspekte, die für die sicherheitsrelevante Verbindung von Maschinen wichtig sind. Die Begriffe fehlersicher und sicherheitsgerichtet werden gleichbedeutend verwendet.

Eine mobile Komponente innerhalb einer Anlage, insbesondere ein AGV oder AMR, kann mittels des beschriebenen Verfahrens derart mit einer weiteren Komponente, insbesondere einer weiteren mobilen Komponente oder einer stationären Komponente, gemeinsam eine Automatisierungsaufgabe lösen, beispielsweise ein Werkstück bearbeiten, dass Anforderungen an die Fehlersicherheit erfüllt werden und somit beispielsweise der Schutz der Menschen, die sich in der Anlage, insbesondere einer Fabrik oder Werkhalle aufhalten, normkonform gewährleistet ist.

Durch die kommunikative und fehlersichere Kopplung, beispielsweise über Industrial WLAN oder alternativ über andere drahtlose oder auch drahtgebundene Kommunikationsverbindungen, werden die mobile Komponente und die weitere Komponente insbesondere als integriertes Fertigungssystem miteinander verbunden. Als Voraussetzung für eine solche Kopplung wird die Pose der mobilen Komponente relativ zu einer weiteren Komponente fehlersicher bestimmt. Dafür wird beispielsweise eine Information über die Pose der mobilen Komponente relativ zu der weiteren Komponente oder relativ zu einer Referenzkomponente oder einem Referenzmarker fehlerfrei bestimmt.

Unter dem Begriff der Pose wird vorliegend die Information betreffend Position und Orientierung verstanden. Die fehlersichere Bestimmung der Pose der mobilen Komponente stellt sicher, dass die mobile Komponente mit ausreichender Sicherheit weiß, wie ihre Position und Orientierung relativ zu der weiteren Komponente zu bewerten ist. Beispielsweise wird die Pose direkt in Relation zur weiteren Komponente bestimmt oder indirekt mit Hilfe von Referenzwerten. Beispielsweise ermittelt die mobile Komponente die eigene Position absolut oder relativ zur weiteren Komponente oder einer Referenzkomponente. Je nach Freiheitsgraden der mobilen Komponente reicht eine Positionsbestimmung zur Bestimmung der Pose im dreidimensionalen Raum aus. Beispielsweise ermittelt die mobile Komponente die eigene Orientierung absolut oder relativ zur weiteren Komponente oder einer Referenzkomponente. Besonders vorzugsweise bestimmt die mobile Komponente die Pose anhand einer vorgebbaren und/oder vorgegebenen Information, die über die Relation zwischen mobiler Komponente und weiterer Komponente Auskunft gibt. Die Pose der mobilen Komponente wird vorzugsweise mit einem vorgebbaren Grad an Genauigkeit bestimmt.

Somit kann gewährleistet werden, dass ein Überwachungsbereich der mobilen Komponente angepasst werden kann, beispielsweise erweitert oder reduziert oder geändert, ohne dass dabei die Gefahr besteht, dass Lücken in der Überwachung entstehen, in denen beispielsweise ein Mensch von einer der beteiligten Komponenten verletzt werden könnte. Insbesondere werden vorteilhaft aufgrund der weiteren Komponente zu überwachende Sicherheitsbereiche zumindest teilweise mittels der mobilen Komponente überwacht, beispielsweise zusätzlich zu den aufgrund der mobilen Komponente durch diese zu überwachenden Sicherheitsbereichen.

Es kommt somit insbesondere zu einer sicheren und definierten Änderung, insbesondere Erweiterung, der Überwachungsbereiche der mobilen Komponente, die auch als Schutzräume bezeichnet werden könnten. Dies erlaubt beispielsweise den Betrieb eines Greifarms auf dem mobilen Roboter, da die Position feststeht. Ferner wird beispielsweise der weiteren Komponente erlaubt mit dem AGV zu interagieren, da dieses den Schutz vor Gefahrenstellen der weiteren Komponente übernimmt.

Die erfolgreiche kommunikative und fehlersichere Kopplung führt dazu, dass Sicherheitsinformationen zwischen der mobilen Komponente und der weiteren Komponente geteilt werden können. Zum Teilen von Sicherheitsinformationen gehört beispielsweise, dass die mobile Komponente mit einer eigenen Sicherheitssensorik die Überwachung von Bereichen, die die weitere Komponente aufgrund der mobilen Komponente nicht überwachen kann, beispielsweise weil sie vom AGV verdeckt werden, übernimmt. Zum Teilen von Sicherheitsinformationen kann ebenso gehören, dass Sensoren der mobilen Komponente die Aufgabe von Sensoren der weiteren Komponente übernehmen. Dies kann auch eine Fallumschaltung der Sicherheitssensorik umfassen.

Das Teilen von Sicherheitsinformationen kann auch darin bestehen, dass Sicherheitsfunktionen, die die weitere Komponente betreffen, beispielsweise die einen Stopvorgang eines Mehrachsroboters der weiteren Komponente einleiten, durch die mobile Komponente ausgelöst werden. So kann beispielsweise der Sensor der mobilen Komponente eine Verletzung des angepassten Sicherheitsbereichs erkennen und eine Sicherheitsfunktion bei Antrieben der weiteren Komponente bewirken.

Zum Beispiel wirkt sich ein Not-Halt-Schalter bei einem AGV auch auf einen Roboter der weiteren Komponente aus, der den AGV belädt.

Im Umfeld von funktional sicheren Systemen in der Industrie wird der Grad der Gefährdung und damit die Anforderungen an Hard- und Software in Performance-Level (PL) angegeben. Die entsprechenden einzuhaltenden Sicherheitslevel werden in der internationalen Normung gemäß IEC 61508/IEC61511 auch als Sicherheitsstufe oder Sicherheits-Integritätslevel, oder englisch safety integrity level, kurz SIL, genannt. Um die Einhaltung des beispielsweise bei Roboterarmen geforderten Performance-Level d (PLd) für Sicherheitsfunktionen zu gewährleisten, erfolgt eine Anpassung des Überwachungsbereichs der mobilen Komponente erst bei erfolgreicher Kopplung mit der weiteren Komponente, und für diese ist wiederum die sicherheitsgerichtete Erkennung der Position und der Orientierung der mobilen Komponente Voraussetzung.

So kann sichergestellt werden, dass auch die Übertragung der sicherheitsgerichteten Signale von der mobilen Komponente sowie deren Verarbeitung bei der weiteren Komponente mindestens auf PLd erfolgen. Fehlersichere Signale können so im gekoppelten Zustand systemübergreifend genutzt werden.

Dies ermöglicht einem Anlagenbetreiber einen normkonformen Einsatz einer mobilen Komponente, beispielsweise eines AGVs, in Verbindung mit einer weiteren Komponente, beispielsweise einem stationären Roboter, in der Produktion. Die Möglichkeiten für den flexiblen Einsatz von Maschinen in Produktionsabläufen werden somit erheblich gesteigert, sodass die Produktivität der gesamten Anlage erhöht wird.

Gemäß einer Ausgestaltung wird ferner ein Überwachungsbereich der weiteren Komponente angepasst. Die erfolgreiche Kopplung hat dann beispielsweise ferner die Wirkung, dass auch der Überwachungsbereich der weiteren Komponente an den mit der mobilen Komponente gekoppelten Zustand angepasst wird. Dadurch kann aus Sicht der weiteren Komponente geänderten Gefahrenquellen, die durch die Wechselwirkung mit der mobilen Komponente neu entstehen, Rechnung getragen werden. Beispielsweise werden aufgrund der mobilen Komponente durch eine Sicherheitssensorik der weiteren Komponente nicht mehr zugängliche Bereiche nicht mehr durch diese überwacht, sondern durch die Sicherheitssensorik der mobilen Komponente. Andere vorherige Überwachungsbereiche der weiteren Komponente, müssen beispielsweise aufgrund der Ausdehnung der mobilen Komponente nicht mehr überwacht werden, weil die mobile Komponente diese Bereiche selbst räumlich abdeckt.

Gemäß einer Ausgestaltung bewirkt eine Verletzung des angepassten Überwachungsbereiches der mobilen Komponente ein Einleiten einer Sicherheitsfunktion, insbesondere der mobilen Komponente und/oder der weiteren Komponente. Der angepasste Überwachungsbereich kann beispielsweise aus mehreren Feldern bestehen, die durch die Sicherheitssensorik der mobilen Komponente überwacht werden. Für eine Verletzung verschiedener Felder können unterschiedliche Sicherheitsfunktionen vorgesehen sein. Dabei sind beispielsweise für verschiedene Felder verschiedene Sicherheitsfunktionen, welche sich an Antrieben der mobilen Komponente unterschiedlich auswirken oder sich an unterschiedlichen Antrieben der mobilen Komponente auswirken, vorgesehen und/ oder verschiedene Felder für verschiedene Sicherheitsfunktionen, die sich wiederum auf Antriebe der mobilen Komponente einerseits und Antriebe der weiteren Komponente andererseits auswirken.

Gemäß einer Ausgestaltung bewirkt eine Verletzung des angepassten Überwachungsbereiches der weiteren Komponente ein Einleiten einer Sicherheitsfunktion, insbesondere der mobilen Komponente und/oder der weiteren Komponente. Durch die erfolgreiche Kopplung werden vorteilhafterweise auch Sicherheitsinformationen wie eine Information über eine Verletzung des Überwachungsbereiches der weiteren Komponente, welcher insbesondere ebenfalls angepasst wurde, an der mobilen Komponente verfügbar gemacht bzw. eine aus dieser Information ableitbare Sicherheitsfunktion an der mobilen Komponente, insbesondere an deren Antrieben, eingeleitet oder umgesetzt.

Dadurch wird vorteilhafterweise das Teilen von Sicherheitsinformationen und die systemübergreifende Nutzung fehlersicherer Signale zwischen mobiler und weiterer Komponente in beide Richtungen realisiert.

Gemäß einer Ausgestaltung wird der Überwachungsbereich der mobilen Komponente angepasst in Abhängigkeit von einem bis zur Kopplung aktivierten Sicherheitsbereich der weiteren Komponente oder in Abhängigkeit von einem aufgrund der Kopplung geforderten Sicherheitsbereich der weiteren Komponente.

Die weitere Komponente kann beispielsweise mit eigener Sicherheitssensorik ausgestattet sein, die selbst für die Überwachung vorgebbarer Felder ausgelegt ist. Bis zur Kopplung werden diese Felder als Überwachungsbereich überwacht. Dazu gehören beispielsweise bei einer stationären weiteren Komponente, beispielsweise einer Bearbeitungsstation mit Roboter oder Manipulator, Felder rings um die Bearbeitungsstation. Diese zuvor überwachten Felder werden bei der Anpassung der Überwachung durch die mobile Komponente berücksichtigt.

Bei einer ebenfalls mobilen weiteren Komponente kann der Überwachungsbereich vor der Kopplung beispielsweise aus in Fahrtrichtung sich ausweitenden Feldern bestehen, für die je nach Abstand von der mobilen Komponente verschiedene Funktionen eingeleitet werden, insbesondere Warnsignal-Ausgaben oder Geschwindigkeitsreduzierung.

Für eine im Stand befindliche mobile weitere Komponente können ebenso verschiedene Felder mit zugeordneten Sicherheitsfunktionen, wie einem Anhalten eines auf der weiteren Komponente installierten Roboters oder dessen Abtrennung von der Stromversorgung, vorgesehen sein. Auch diese zuvor überwachten Felder werden nach einer Kopplung zweier mobiler Komponenten bei der Anpassung der Überwachung durch die mobile, insbesondere jeweils andere mobile, Komponente berücksichtigt. Insbesondere werden beide Überwachungsbereiche angepasst, indem die neue Gefährdungssituation berücksichtigt wird. Der angepasste Überwachungsbereich wird applikations- oder situationsabhängig ausgestaltet. Beispielsweise werden kreisförmige Überwachungsbereiche der ungekoppelten, im Stillstand befindlichen Komponenten angepasst, indem sie eine Außenhülle eines zu überwachenden Bereiches für einen angepassten Überwachungsbereich vorgeben. Die angepassten Überwachungsbereiche berücksichtigen beispielsweise sowohl aufgrund der Kopplung neu entstehende Gefährdungen als auch aufgrund der Kopplung nicht oder nicht mehr benötigte Überwachungen.

Des Weiteren können durch die Kopplung erst nötig gewordene Sicherheitsbereiche, die aufgrund der Funktionsweise der weiteren Komponente und der Kopplung mit dieser für das gekoppelte System insgesamt bestehen, von der Sicherheitssensorik der mobilen Komponente überwacht werden. Beispielsweise wurden Teile des Überwachungsbereichs, der durch die geforderten Sicherheitsbereiche nach der Kopplung von der mobilen Komponente überwacht werden, zuvor nicht von der weiteren Komponente überwacht, insbesondere weil diese keine eigene Sicherheitssensorik aufweist. So werden im gekoppelten Zustand Bereiche überwacht, die zuvor nicht überwacht werden mussten, beispielsweise weil ein Roboter der weiteren Komponente nur in gekoppeltem Zustand bewegt werden kann.

Gemäß einer Ausgestaltung wird der Überwachungsbereich der mobilen Komponente angepasst, indem zuvor von einem Überwachungsbereich der weiteren Komponente überwachte Bereiche aufgrund der Kopplung durch den Überwachungsbereich der mobilen Komponente überwacht wird. Beispielsweise können Teile, insbesondere einzelne Felder, der Überwachungsbereiche nach der Kopplung durch die mobile Komponente übernommen werden. Beispielsweise wechselt der Überwachungsfall derart, dass die Sicherheitssensorik der mobilen Komponente Überwachungsfelder der weiteren Komponente teilweise bis hin zu vollständig übernimmt. Ebenso können Bereiche weiterhin trotz der Kopplung unverändert durch die weitere Komponente überwacht werden. Beispielsweise muss nicht der gesamte Überwachungsbereich der weiteren Komponente übernommen werden, sondern nur ein Bereich rund um die mobile Komponente im gekoppelten Zustand.

Gemäß einer Ausgestaltung wird der Überwachungsbereich der mobilen Komponente angepasst, indem zumindest für einen Anteil des Überwachungsbereichs, insbesondere für Bereiche, die mit bis zur Kopplung von einem Überwachungsbereich der weiteren Komponente überwachten Feldern überlappen, ein Überwachungsmodus, insbesondere eine Sicherheitsfunktion, angepasst, insbesondere ergänzt oder umgeschaltet, wird. Beispielsweise kann so zusätzlich zu einer Anpassung der Überwachungsbereiche in Hinblick auf die Felder, also die räumliche Ausdehnung des Überwachungsbereiches, auch eine Anpassung der Logik erfolgen, mit der eine Sicherheitsfunktion eingeleitet wird. Beispielsweise werden nach erfolgreicher Kopplung für einen Überwachungsbereich, insbesondere ein überwachtes Feld, der mobilen Komponente im Falle einer Verletzung zwei Sicherheitsfunktionen ausgelöst, einerseits ein Safe Limited Speed-Zustand, kurz SLS, für einen Antrieb der weiteren Komponente, insbesondere einen Antrieb eines darauf installierten Greifroboters, und andererseits ein sogenannter Safe Torque off, kurz STO, für einen Greifroboter, der auf der mobilen Komponente installiert ist. In einem solchen Fall verlangsamt der Roboter der weiteren, beispielsweise stationären, Komponente und der Roboter der mobilen Komponente wird von der Stromversorgung getrennt.

Gemäß einer Ausgestaltung wird der Überwachungsbereich der weiteren Komponente angepasst, indem ein Bereich in Abhängigkeit von der Position der mobilen Komponente aus der Überwachung durch die weitere Komponente ausgenommen wird. Dies ermöglicht beispielsweise, dass die mobile Komponente selbst nicht als Gefahrenobjekt erkannt wird und insbesondere, dass durch diese oder ein Roboter, der auf der mobilen Komponente angebracht ist, sich vor oder in der weiteren Komponente aufhalten oder bewegen kann, ohne dass die Überwachung durch die weitere Komponente eine Sicherheitsfunktion einleitet, beispielsweise weiterhin oder dauerhaft eine Verletzung meldet und insbesondere daraufhin still steht oder andere Sicherheitsmaßnahmen einleitet.

Gemäß einer Ausgestaltung wird der Überwachungsbereich der weiteren Komponente angepasst, indem eine Sicherheitseinrichtung zwischen der mobilen Komponente und der weiteren Komponente deaktiviert wird. Insbesondere bei weiteren Komponenten, die als stationäre Bearbeitungsstationen ausgebildet sind, sind oftmals Sicherheitseinrichtungen wie Lasergitter oder Laservorhänge oder andere optische Einrichtungen vorgesehen, um ein Eingreifen oder Betreten durch Menschen zu verhindern. Eine solche Sicherheitseinrichtung wird bei erfolgreicher Kopplung deaktiviert und zugleich wird das gekoppelte Gesamtsystem derart überwacht, dass Lücken in der Überwachung, die durch die deaktivierten Sicherheitseinrichtungen entstehen, durch die Anpassung des Überwachungsbereichs der mobilen Komponente und vorzugsweise auch des der weiteren Komponente ausgeglichen werden. Bei mobilen Komponenten, die als mobile Bearbeitungsstationen beispielsweise mit mechanischen Sicherheitseinrichtungen wie Scheiben ausgebildet sind und insbesondere nach der Kopplung mit der weiteren Komponente schlüssig verbunden sind, wird beispielsweise nur ein Teilbereich der Lichtschranken deaktiviert, in welchem die Sicherheitseinrichtungen der stationären Komponente mit der mobilen Komponente überlappen. So kann ein Roboter der mobilen Komponente mit der weiteren Komponente wechselwirken und insbesondere in den Bereich der weiteren Komponente, die sonst von der Lichtschranke gesichert ist, eindringen, ohne die Lichtschranke und insbesondere einen Not-Halt des Roboter-Arms der weiteren Komponente auszulösen. Dies ist nach Norm zulässig, da eine solche beschriebene mobile Komponente selbst die betroffenen Bereiche durch mechanische Bauteile, wie ihre Basis, Profile und Scheiben, blockiert.

Gemäß einer Ausgestaltung wird die Pose mittels eines Konturerkennungsverfahrens bestimmt. Die sichere Bestimmung der Position und der Orientierung der mobilen Komponente in Relation zur weiteren Komponente ist vorteilhaft mittels eines Konturerkennungsverfahrens zu realisieren, bei dem beispielsweise auf einer gewissen Höhe oberhalb des Bodens eine Aufnahme der Umgebung erfolgt. Zur fehlersicheren Umsetzung der Konturerkennung wird beispielsweise ein fehlersicher verbauter Laserscanner der mobilen Komponente verwendet. Der mobilen Komponente kann beispielsweise eine bestimmte Kontur vorgegeben werden, bei deren Erkennen sie eine Einordnung ihrer eigenen Position und Orientierung in Relation zur weiteren Komponente vornehmen kann. Im Allgemeinen können eine Vielzahl an Konturen an einem Laserscanner einer mobilen Komponente angelegt werden.

Gemäß einer Ausgestaltung wird für das Konturerkennungsverfahrens eine Kontur der weiteren Komponente erkannt. Beispielsweise ist die zu erkennende Kontur auf einer Fläche angebracht, man spricht von einem positiven Auftrag auf die vorhandene Fläche. Ebenso kann die Kontur in eine Fläche eingearbeitet werden, sodass diese besser vor mechanischen Einflüssen geschützt wird. Man spricht dann von einem negativen Auftrag auf die Fläche. Dabei sinkt die Kollisionsgefahr der zu erkennenden Kontur mit einem Menschen oder Maschinen in der Anlage, so dass sie nicht unbeabsichtigt beschädigt oder verformt wird, was die Erkennung unmöglich gestalten würde.

Bei mehreren in der mobilen Komponente angelegten Konturen ist eine Kopplung an einer Vielzahl von weiteren mit den jeweiligen Konturen versehenen Komponenten, möglich. Die Verwendung einer sicherheitsgerichteten Kontur ermöglicht die fehlersichere Kopplung und somit letztendlich die Konformität mit den aktuellen Normen.

Gemäß einer Ausgestaltung wird ein einheitliches Sicherheitslevel, insbesondere ein zertifiziertes Sicherheitslevel, beim Bestimmen der Pose der mobilen Komponente, beim Aufbau der kommunikativen und fehlersicheren Kopplung und beim Anpassen des Überwachungsbereichs angewendet. Insbesondere wird das Sicherheitslevel durch die Gefährdung von Robotern, die auf den Komponenten installiert sind, und durch den Grad an Wechselwirkungsmöglichkeiten mit menschlichen Nutzern in der Anlage bestimmt. Somit richtet sich das anzuwendende Sicherheitslevel nach der neu entstandenen Gefährdungssituation.

Gemäß einer Ausgestaltung wird ferner auch bei einem Einleiten eines Sicherheitszustands aufgrund einer Verletzung des angepassten Überwachungsbereiches das einheitliche Sicherheitslevel angewendet. Somit wird vorteilhaft sichergestellt, dass das geforderte Sicherheitslevel durchgehend von der Signalerfassung bis zur Ausgabe der Sicherheitsmaßnahme erfüllt wird.

Gemäß einer Ausgestaltung wird die kommunikative und fehlersichere Kopplung zwischen der mobilen Komponente und der weiteren Komponente dynamisch aufgebaut und beendet.

Für den Aufbau der kommunikativen und fehlersicheren Kopplung wird beispielsweise eine drahtlose, aber dennoch fehlersicheren Kommunikation, beispielsweise über WLAN, aufgebaut. Ferner sind auch drahtgebundene Kommunikationsverbindungen möglich. Die mobile Komponente kann sich beispielsweise als Teilnehmer der aufgebauten Kommunikation dynamisch bei einem Kommunikationspartner an- und wieder abmelden. So kann die mobile Komponente bei der Erledigung einer Gesamtaufgabe vorteilhaft zu verschiedenen Maschinen Verbindung aufnehmen. Alternativ kann eine zentrale fehlersichere Steuerung die Kommunikation zu einer von mehreren mobilen Komponenten herstellen, die dann die temporäre fehlersichere Kommunikation zu genau der weiteren Komponente herstellt, mit der die mobile Komponenten zusammenarbeiten soll.

Die Erfindung betrifft ferner eine Sicherheitseinheit einer mobilen Komponente einer industriellen Automatisierungsanlage, umfassend eine Schnittstelle zu einem Sensor zum fehlersicheren Bestimmen einer Pose der mobilen Komponente relativ zu einer weiteren Komponente, eine Kopplungsschnittstelle zum Aufbau einer kommunikativen und fehlersicheren Kopplung zwischen der mobilen Komponente und der weiteren Komponente, eine Überwachungseinheit zum Anpassen eines Überwachungsbereichs der mobilen Komponente bei erfolgreicher Kopplung.

Der Sensor kann als Teil einer Sicherheitseinrichtung der mobilen Komponente aufgefasst werden, die fehlersicher verbaut ist. Die Funktionsweise oder das Sensorprinzip des eingesetzten Sensors ist vorzugsweise an die Anwendung anzupassen. Auch der Einsatz von 3D-Sensoren ist je nach Applikation vorteilhaft möglich.

Die Überwachungseinheit ist als Teil einer Steuerung, insbesondere einer fehlersicheren Steuerung, ausgebildet oder ist als die Steuerung der mobilen Komponente ausgebildet. Somit kann in einer Ausgestaltung das Sicherheitssystem auf der Steuerung ausgebildet sein oder anders ausgedrückt eine Steuerung, insbesondere eine PLC, der mobilen Komponente eine Safety-Steuerung sein.

Gemäß einer Ausgestaltung umfasst die Sicherheitseinheit ferner eine Signalausgabeeinheit zum Einleiten eines Sicherheitszustands, insbesondere der mobilen Komponente und/oder der weiteren Komponente, bei einer Verletzung des angepassten Überwachungsbereiches.

Die Erfindung betrifft ferner ein Sicherheitssystem mit einer Sicherheitseinheit gemäß den obigen Ausgestaltungen, wobei das Sicherheitssystem ferner mindestens einen Sensor umfasst, insbesondere mindestens einen 2D-Sensor, 3D-Sensor oder Laserscanner.

Gemäß einer Ausgestaltung ist die weitere Komponente eine weitere mobile Komponente. Die mobile Komponente sowie die weitere mobile Komponenten können dabei AGVs oder AMRs sein. Generell sind unter einer mobilen Komponente alle mobilen Einheiten sowie dynamisch hinzufügbaren oder entfernbaren Aufbauten einer Produktionsanlage mit dem beschriebenen Sicherheitssystem zu verstehen.

Gemäß einer Ausgestaltung ist die weitere Komponente eine stationäre Komponente. Dabei kann die stationäre Komponente mit einer eigenen Sicherheitseinheit ausgestattet sein. Beispielsweise ist die stationäre Komponente mit eigener Sicherheitssensorik ausgestattet oder es ist in der stationären Komponente eine Sicherheitseinrichtung in Form einer Sicherheitssteuerung vorgesehen. Die Sicherheitssteuerung steuert beispielsweise Maschinen oder Roboter oder generell steuerbare bewegliche Teile in oder an der stationären Komponente sicherheitsgerichtet an und hält diese beispielsweise in einer Stop-Stellung, bis eine Kopplung mit der mobilen Komponente erfolgreich aufgebaut wurde. Beispielsweise weist die stationäre Komponente keine Sicherheitssensorik auf und auch keine Schnittstelle zu entsprechender Sensorik.

Die Erfindung betrifft ferner ein Verfahren zum Anpassen einer fehlersicheren Überwachung in einer industriellen Automatisierungsanlage, wobei durch eine kommunikative und fehlersichere Kopplung einer mobilen Komponente der industriellen Automatisierungsanlage mit einer weiteren Komponente der industriellen Automatisierungsanlage ein Überwachungsbereich der mobilen Komponente derart angepasst wird, dass aufgrund der weiteren Komponente zu überwachende Sicherheitsbereiche zumindest teilweise mittels der mobilen Komponente überwacht werden.

Gemäß einer Ausgestaltung wird die kommunikative und fehlersichere Kopplung basierend auf einer fehlersicheren Bestimmung einer Pose der mobilen Komponente relativ zur weiteren Komponente durchgeführt.

Die Erfindung wird nachfolgend anhand von Ausführungsbeispielen mit Hilfe der Figuren näher erläutert. Es zeigen:
- Figur 1: eine schematische Darstellung eines AGVs mit Sicherheitssensorik gemäß Stand der Technik;
- Figur 2: eine schematische Darstellung einer stationären Bearbeitungsstation mit Sicherheitssensorik gemäß Stand der Technik;
- Figur 3: eine schematische Darstellung eines Systems aus mobiler und weiterer Komponente gemäß einem ersten Ausführungsbeispiel der Erfindung;
- Figur 4: eine schematische Darstellung einer Visualisierung eines Computerprogramms zur Konturerkennung gemäß dem ersten Ausführungsbeispiel der Erfindung;
- Figur 5: eine schematische Darstellung einer angepassten Überwachung gemäß dem ersten Ausführungsbeispiel der Erfindung;
- Figur 6: eine schematische Darstellung einer weiteren Komponente gemäß einem zweiten Ausführungsbeispiel der Erfindung;
- Figur 7: eine schematische Darstellung einer angepassten Überwachung gemäß dem zweiten Ausführungsbeispiel der Erfindung;
- Figur 8: eine schematische Darstellung von Überwachungsbereichen einer mobilen Komponente während einer Navigation gemäß Stand der Technik;
- Figur 9: eine schematische Darstellung einer mobilen Komponente und einer weiteren mobilen Komponente gemäß einem dritten Ausführungsbeispiel der Erfindung;
- Figur 10: eine schematische perspektivische Ansicht einer mobilen Komponente;
- Figur 11: eine schematische Darstellung einer angepassten Überwachung gemäß dem dritten Ausführungsbeispiel der Erfindung;
- Figur 12: eine schematische Darstellung eines Sicherheitssystems einer mobilen Komponente nach einem beliebigen der genannten Ausführungsbeispiele.

In den Figuren sind funktionsgleiche Elemente mit denselben Bezugszeichen versehen, sofern nichts anderes angegeben ist.

Ein erstes Ausführungsbeispiel der Erfindung wird anhand von Figur 3 erläutert, die schematisch Teile eines flexiblen Fertigungssystems 300 zeigt, bei dem Module 320, 321 dynamisch an- und abdocken. Dabei ist ein Roboterarm 311 in der Mitte eines ihn umgebenden Hexagons statisch montiert. Die einzelnen Produktionsmodule 320, 321 lassen sich beispielsweise an fünf der sechs Seiten des Hexagons andocken. Drei dieser fünf Seiten sind exemplarisch dargestellt. Die sechste Seite ist mit Transportbändern ausgestattet und bietet keine Möglichkeit zur Kopplung (nicht dargestellt).

Die Module sind beispielsweise ein AGV 320 oder eine mobile, insbesondere verschiebbare Bearbeitungsstation 321 mit eigener Sicherheitssensorik. Im Folgenden wird die Interaktion zwischen dem AGV 320 als mobile Komponente und der stationären Fertigungsstation 300 als weitere Komponente näher betrachtet.

An den Seiten der stationären Fertigungsstation 300, an denen die Module andocken können, soll eine Interaktion zwischen Roboterarm 311 und den Modulen möglich sein und insbesondere soll ein auf dem AGV 320 befindlicher Manipulator 321 in das Hexagon eindringen können, beispielsweise zum Einbringen von Fertigungsteilen oder von Werkzeugen für den Roboterarm 311 oder zum Entnehmen von Werkstückträgern von einem Förderband innerhalb des Hexagons.

Die stationäre Fertigungsstation 300 ist in den Ecken des Hexagons mit Sicherheitslaserscannern 330 und entlang der Seiten mit Lichtschranken 331 ausgestattet (nur auf einer Seite exemplarisch abgebildet). Die Sicherheitslaserscanner 330 ermöglichen die Funktion, dass der Roboterarm 311 bei Verletzung der Überwachungsbereiche 340 der Laserscanner 330 mit reduzierter Geschwindigkeit arbeitet, d.h. die Funktion sicherheitsgerichtete reduzierte Geschwindigkeit oder Safe Limited Speed, kurz SLS, einleitet. Verletzt ist der Überwachungsbereich 340 dann, wenn sich das AGV 320 zumindest teilweise im Überwachungsbereich 340 befindet.

Die Lichtschranken 331 stellen sicher, dass im Falle einer Verletzung der Lichtschranke der sicherheitsgerichtete überwachte Halt des Roboterarmes, d.h. die Funktion Safe Torque Off, kurz STO, eingeleitet wird.

Wird nun das AGV 320 an die stationäre Fertigungsstation 300 entlang des Bewegungspfades 350 angenähert, so wird der Roboterarm 311 verlangsamt, weil das AGV 320 mit seiner Außenhülle den Überwachungsbereich 340 der Laserscanner 330 verletzt.

Nachdem das AGV 320 an einer Seite, dem Dock 304 angekommen ist, muss die Pose des AGVs 320 sicherheitsgerichtet bestimmt werden, damit eine Kopplung mit der stationären Fertigungsstation 300 erfolgen kann. Die sicherheitsgerichtete Bestimmung der Pose des mobilen Roboters erfolgt durch die Sicherheitsfunktion "sicherheitsgerichtete Konturerkennung" der Laserscanner 333 des AGVs 320. An jeder Position des Hexagons, an der Bedarf für eine fehlersichere Erkennung besteht, ist eine Kontur 360, 361 vorgesehen, die einzigartig gestaltet ist, damit nur die jeweilige Kontur 360, 361 durch die Laserscanner erkannt wird und Verwechslungen ausgeschlossen sind. Wie auch die normalen Überwachungsbereiche oder Sicherheitsfelder werden Konturen statisch in der Konfiguration der Laserscanner angelegt und können dann binär ausgewertet und logisch verarbeitet werden. Dafür ist insbesondere die Kontur 360 für die Laserscanner 333 des AGVs 320 als Vorlage verfügbar und die mittels der Laserscanner 333 gescannte Umgebung wird gegen die abgespeicherte Kontur 360 abgeglichen.

Dabei verschiebt sich die Kontur, wie sie durch die Laserscanner erfasst wird, relativ zum AMR, wenn sich seine Position oder Orientierung ändert. Daher ist im Falle einer erkannten und anhand der gespeicherten Vorlagen verifizierten Kontur die passende Pose sichergestellt. Mit anderen Worten gibt es nur eine valide Pose des AMR relativ zur Kontur, die zu einem Match führt.

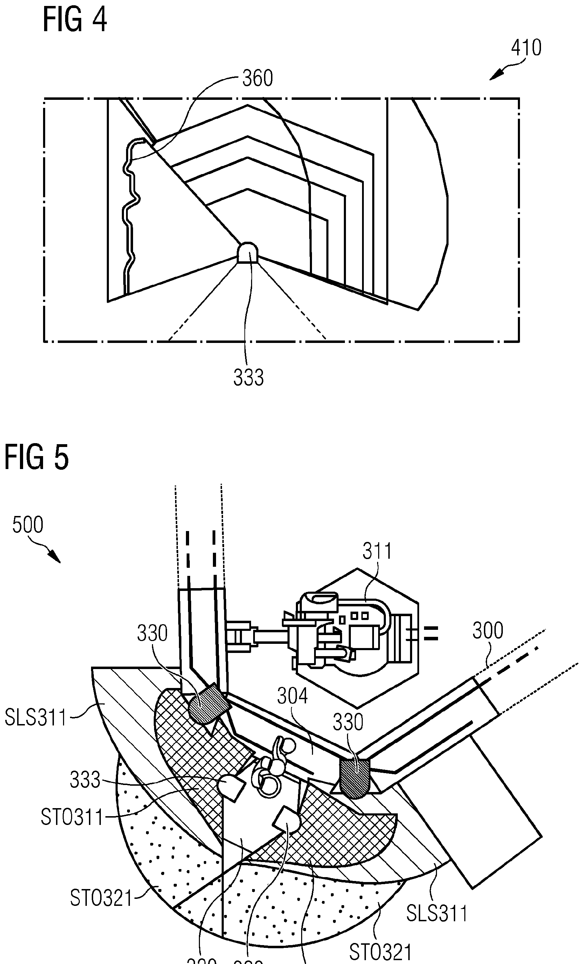

In Figur 4 ist ein Screenshot 410 des Computerprogramms "SICK Safety-Designer" gezeigt, mit der Kontur 360 an der linken Seite des Scans bei Annäherung an die stationäre Fertigungsstation 300.

Mit Hilfe der sicherheitsgerichteten Erkennung der Kontur 360 mittels des Laserscanners 333 nach PLd kann die Fallumschaltung der Sensorik auf den Fall des gekoppelten Systems fehlersicher erfolgen. Dabei erfüllen alle beteiligten Sensoren das sich durch die Gefährdung ergebende und dadurch vorgegebene Sicherheitslevel PLd.

Wenn das AGV die vorgesehene Pose erreicht hat, wobei eine zuvor eingespeicherte Kontur vom Laserscanner erkannt wurde und dieser ein binäres Signal für die verifizierte Pose ausgibt, wird die Kopplung zwischen AGV 320 und stationärer Fertigungsstation 300 eingeleitet. Auch dafür werden wie oben beschrieben durchgängig sicherheitsgerichtete Verfahren nach PLd eingesetzt. In diesem Beispiel ist die Kontur fest an einer stationären Maschine montiert. Daher wäre auch eine Umrechnung der eigenen Position und/oder Orientierung in ein Weltkoordinatensystem über die relative Position zur stationären Komponente bzw. über deren Position in der Welt denkbar. Auch diese Berechnung kann in der F-PLC und somit fehlersicher erfolgen.

Nach erfolgreicher Kopplung sind das AGV 320 und die stationäre Fertigungsstation 300 ein fehlersicheres Gesamtsystem 500. Die Laserscanner 330 der stationären Fertigungsstation 300 wechseln dann den Überwachungsfall und erkennen das AGV 320 nicht mehr als Störobjekt, so dass keine Verletzung des Überwachungsbereichs 340 mehr erkannt und gemeldet wird. Der Überwachungsbereich der stationären Fertigungsstation 300 wird derart angepasst, dass für die Fläche des AGVs zuständige Laserscanner 330 so umgeschaltet werden, dass diese die Fläche des nun im Stillstand befindlichen Moduls nicht mehr überwachen.

Auch die Laserscanner 333 des AGVs 320 wechseln den Überwachungsfall und werten Felder aus, die sowohl auf den Manipulator 321 des AGVs 320 als auch auf den Roboterarm 311 im Hexagon Auswirkungen haben.

Figur 5 stellt die angepassten Überwachungsbereiche, Sicherheitsbereiche und Lichtschranken nach erfolgreicher Kopplung grafisch dar. Für alle gezeigten Überwachungsbereiche gilt, dass es sich hierbei um logisch hinterlegte Bereiche oder Felder handelt. Es soll insbesondere durch die schematische Darstellung der Überwachungsbereiche und Sicherheitsfelder in den Figuren keine real erfolgende Visualisierung und auch keine Simulation zum Ausdruck gebracht werden. Schematische Darstellungen in Engineering-Programmen oder Simulationen in Simulationsprogrammen sind jedoch vorteilhaft einsetzbar, um die Überwachungsbereiche und deren Anpassung zu programmieren.

Die angepassten Überwachungsbereiche SLS311, als linierte Bereiche abgebildet, gehen von den Laserscannern 330 der ortsfesten Anlage 300 aus und führen bei Verletzung zur sicheren Geschwindigkeit des Roboterarms 311 im Hexagon. Die angepassten Überwachungsbereiche STO311, kariert abgebildet, werden von den Laserscannern 333 des AGVs 320 ausgewertet und führen zu einem sicheren Halt des Roboterarms 311. Sie werden benötigt, da ansonsten ein Mensch durch den "gemuteten", also den freigeschalteten Bereich des Lichtgitters hindurchgreifen könnte, ohne dabei den sicheren Halt des Roboterarms 311 auszulösen. Beispielsweise wurde an der Seite des Dock 304 des Hexagons die Lichtschranke nur im inneren Bereich, in den der Manipulator 321 aufgrund der geometrischen Abmessungen gelangen kann, deaktiviert. Die angepassten Überwachungsbereiche STO321 führen zum ungesteuerten Stillsetzen des Manipulators 321 auf dem AGV 320.

Das erste Ausführungsbeispiel zeigt die Relevanz der korrekten und fehlersicheren Erkennung der Orientierung des AGVs 320. Würde diese falsch erkannt, und das AGV 320 beispielsweise um einige Grad gegenüber der stationären Anlage 300 mit der daran befestigten Kontur 360 verdreht stehen, würden Lücken in den überwachten Feldern entstehen, in denen sich ein Mensch der Anlage nähern könnte, ohne erfasst zu werden. Zudem könnten bei einer fehlerhaften Konturerkennung je nach Fehl-Orientierung die angepassten Überwachungsbereiche STO311 und STO321 auslösen, wenn die stationäre Anlage diese verletzen würde, so dass ggf. sowohl der Roboterarm 311 im Hexagon als auch der Manipulator 321 auf dem AGV abgeschaltet würden.

Vorteilhaft kann mit den gemäß dem ersten Ausführungsbeispiel projektierten technischen Schutzmaßnahmen der dreistufige iterative Prozess zur Risikobeurteilung und Risikominderung aus der DIN EN ISO 12100 erfolgreich abgeschlossen werden.

Anhand eines zweiten Ausführungsbeispiels wird ein Anwendungsbeispiel aus der Automobil-Industrie beschrieben. Beispielsweise setzen Automobilhersteller darauf, dass in Fabriken das klassische Band durch eine Flotte an AGVs ersetzt wird. Einzelne Fertigungszellen müssen somit ebenfalls nicht mehr sequenziell angeordnet werden, sondern können quasi frei in einer Halle platziert werden, wobei die Platzierung den nach wie vor vorhandenen Abhängigkeiten und Reihenfolgen beim Zusammenbau eines Autos genügen wird.

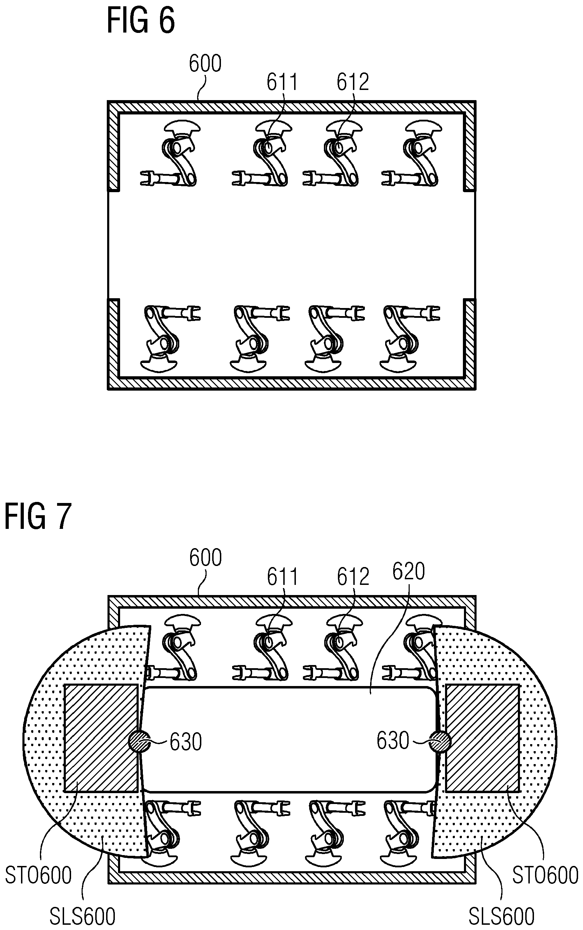

In diesem Szenario transportieren AGVs die Auto-Karossen und bringen sie von einer Fertigungszelle zur nächsten, je nach spezifischer Ausstattung des betreffenden Fahrzeugs. Eine solche Fertigungszelle 600 ist exemplarisch in Figur 6 gezeigt, wobei in einer realen Ausgestaltung viele Fertigungszellen in einer Fabrik vorgesehen sind. Die Fertigungszellen 600 werden von den AGVs quasi durchfahren, wobei es mittendrin anhält, damit die Zelle ihre Produktionsschritte durchführen kann. Figur 7 zeigt eine solche Situation, in der sich ein AGV 620 in der Fertigungszelle 600 befindet. Dabei steht es insbesondere und bewegt sich nicht relativ zur Fertigungszelle 600. Aus Gründen der Übersichtlichkeit ist auch die Darstellung des AGVs 620 auf eines beschränkt, wobei eine Vielzahl von AGVs, insbesondere mehr AGVs als Fertigungszellen, vorgesehen sind.

Ist wie in Figur 6 gezeigt kein AGV mit einer Karosse in der Fertigungszelle 600, sind alle beweglichen Teile, wie beispielsweise Roboter 611, 612, in einem sicheren Zustand, insbesondere in einem STO. Dafür sind beispielsweise sicherheitsgerichtete Steuerungen zur Ansteuerung der Roboterantriebe vorgesehen.

Ein AGV 620 weist entsprechende Sensorik auf, damit es in der Halle zwischen den Fertigungszelle herumfahren darf, in der sich auch Menschen aufhalten. Das AGV 620 kann somit selbstständig überwachen, dass es bei der Einfahrt in die Fertigungszelle 600 keinen Menschen gefährdet. Sobald sich das AGV 620 in der Fertigungszelle 600 befindet und eine sicherheitsgerichtete Positions- und Orientierungserkennung mittels Laserscanner durchgeführt hat, stellt es eine sichere Kommunikationsverbindung zur Fertigungszelle 600 her. Das AGV 620 nutzt die zur Navigation vorhandenen Laserscanner 630 an Vorder- und Rückseite.

Sobald sich ein Mensch der Fertigungszelle 600 und somit dem Gefährdungsbereich nähert, wird er von den Laserscannern 630 des AGV 620 erkannt. Eine Bewegung eines Menschen im angepassten Überwachungsbereich SLS600 wird der fehlersicheren Steuerung der Fertigungszelle 600 über die fehlersichere Kommunikationsverbindung gemeldet, die daraufhin gemäß der SLS-Funktion alle Aktoren auf eine sichere Geschwindigkeit reduziert. Insbesondere gibt das AGV 620 getrennte Meldungen für Vorder- und Rückseite, so dass die Zellensteuerung auch nur die unmittelbar betroffenen Aktoren verlangsamen kann, statt die komplette Zelle anhalten zu müssen. Sollte ein Mensch der Fertigungszelle 600 zu nahekommen und in dem angepassten Überwachungsbereich ST0600 erkannt werden, werden alle Roboter 611, 612 gemäß einem STO abgeschaltet.

Vorteilhaft werden gemäß dem zweiten Ausführungsbeispiel Fertigungszelle 600 und AGV 620 in Hinblick auf ihre Abmessungen so aufeinander abgestimmt, dass nur die Zutrittsbereiche der Fertigungszelle 600 abgesichert werden müssen und diese gerade durch die Sensorik des AGVs 620 überwachbar sind. Für die Überwachung durch das AGV 620 dienen je nach Anwendung und Projektierung als angepasste Überwachungsbereiche SLS600, STO600 andere Felder als die zur Navigation durch die Anlage verwendeten.

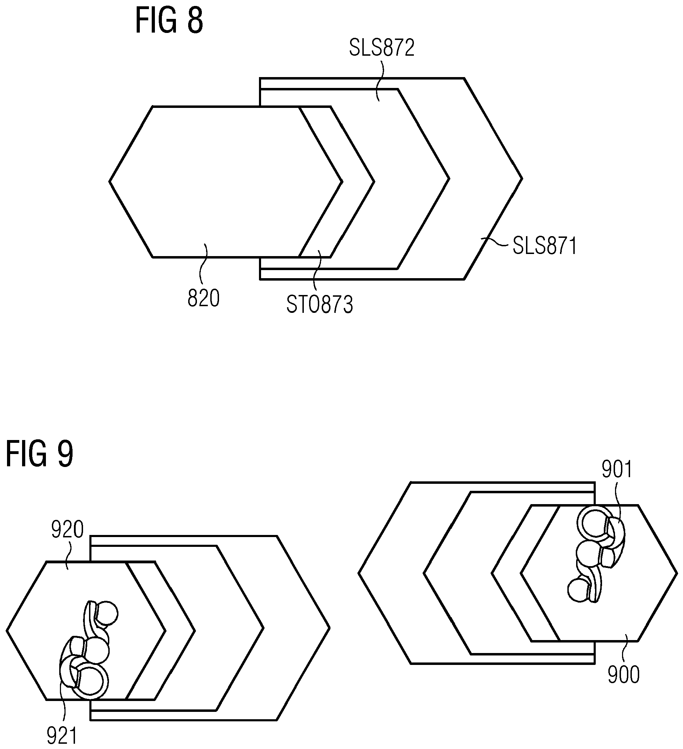

Anhand von Figur 8 ist veranschaulicht, wie Navigations-Überwachungsfelder eines im Fahren-Modus befindlichen AGVs 820 aussehen können. Es sind drei aneinander anschließende Felder SLS871, SLS872, STO873 gezeigt, die bei Eindringen eines Objektes in den jeweiligen Bereich gestaffelt drei unterschiedliche Sicherheitsfunktionen auslösen, insbesondere jeweils das Einleiten der Sicherheitsfunktion sicherheitsgerichtete Geschwindigkeit bei SLS871 und SLS872 mit zweiunterschiedlichen vorgegebenen, insbesondere konfigurierten, Soll-Geschwindigkeiten sowie das Einleiten eines STO in STO873. So kann erreicht werden, dass das AGV 820 sich immer langsamer in Fahrtrichtung bewegt, je näher es einem Objekt kommt oder je näher ein Objekt dem AGV 820 kommt und schließlich abgeschaltet wird.

Bei Vergleich der angepassten Überwachungsbereiche aus Figur 7 mit den Navigations-Überwachungsbereichen aus Figur 8 wird deutlich, dass sowohl die Geometrie der Überwachungsbereiche, insbesondere die Auswahl zu überwachender Felder aus der Menge der insgesamt überwachbaren Felder, von einander abweicht, als auch eine je angepasstem Überwachungsbereich hinterlegte Sicherheitsfunktion. Die Auswertung von Überwachungsfeldern wird aus Performancegründen typischerweise in Überwachungsfälle mit wenigen, beispielsweise acht, Feldern zusammengefasst.

In konventionellen Fabriken muss jede Fertigungszelle mit eigener sicherheitsgerichteter Sensorik ausgestattet sein, um den gängigen Normen zu genügen. Die Fertigungszelle 600 als weitere stationäre Komponente gemäß dem zweiten Ausführungsbeispiel der Erfindung kommt ohne eigene teure sicherheitsgerichtete Sensorik aus, so dass sich ein großes Einsparpotential für Automobil-Fertiger ergibt. Dabei wird vorteilhaft das Sicherheitsniveau der gesamten Anlage nicht reduziert. Dieses Beispiel dient der Veranschaulichung und lässt sich auf Beispiele aus anderen Fertigungsbranchen übertragen.

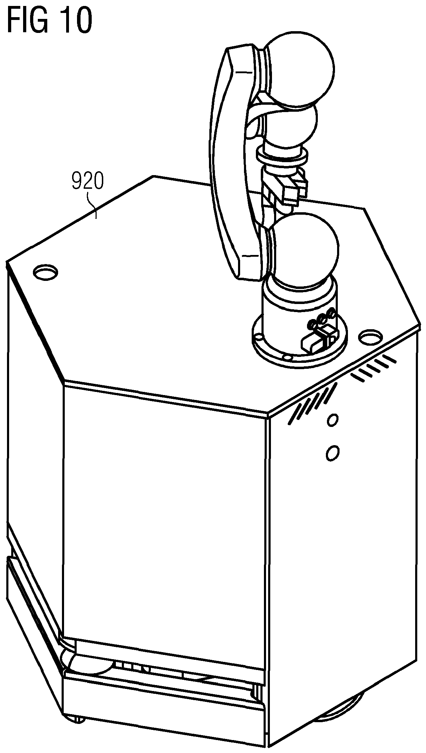

Gemäß einem dritten Ausführungsbeispiel der Erfindung ist die Kopplung von zwei AMRs vorgesehen. Figur 9 zeigt schematisch zwei sich auf einer freien Fläche bewegende AMRs, einen AMR 920 und einen weiteren AMR 900. Beispielsweise führen die beiden AMRs gemeinsam einen Fügeprozess durch oder tauschen Material oder Werkzeuge miteinander aus. Figur 10 zeigt zur Veranschaulichung einen solchen AMR in einer seitlich perspektivischen Darstellung.

Die AMRs 920, 900 haben dafür jeweils einen Manipulator 921, 901 auf ihrer Plattform installiert und diese dürfen sich jeweils nur bewegen, wenn sichergestellt ist, dass Personen genügend Abstand zum jeweiligen Manipulator und auch zum jeweiligen AMR halten. Da ein AMR 900 durch seine Sicherheitssensorik zumindest zunächst nicht zwischen Personen, Robotern und Gegenständen unterscheiden kann, wird auch hier mit einer fehlersicheren Erkennung einer Kontur, die beispielsweise am AMR 900 angebracht ist, gearbeitet. Nach fehlersicherer Erkennung einer Kontur am AMR 900 durch das AMR 920 kann sich dieses sicher sein, dass es sich um den gewünschten AMR 900, beispielsweise einen benachbarten AMR 900 innerhalb einer flexiblen Fertigungsanlage oder den in einem flexiblen Fertigungsprozess vorgesehenen zuliefernden AMR, handelt.

Bis hierhin kann vorteilhafterweise der jeweilige Sicherheitsfall der AMRs 900, 920, den diese für ihre Navigation in der Anlage verwenden, aktiviert sein. Beispielsweise werten beide AMRs 900, 920 im Fahren Felder wie anhand von Figur 8 für ein AGV ohne Manipulator beschrieben aus. Bei einer erkannten Bewegung eines Objekts oder Menschen innerhalb der Felder wird für den Antrieb des AMRs eine reduzierte Geschwindigkeit oder ein STO vorgegeben.

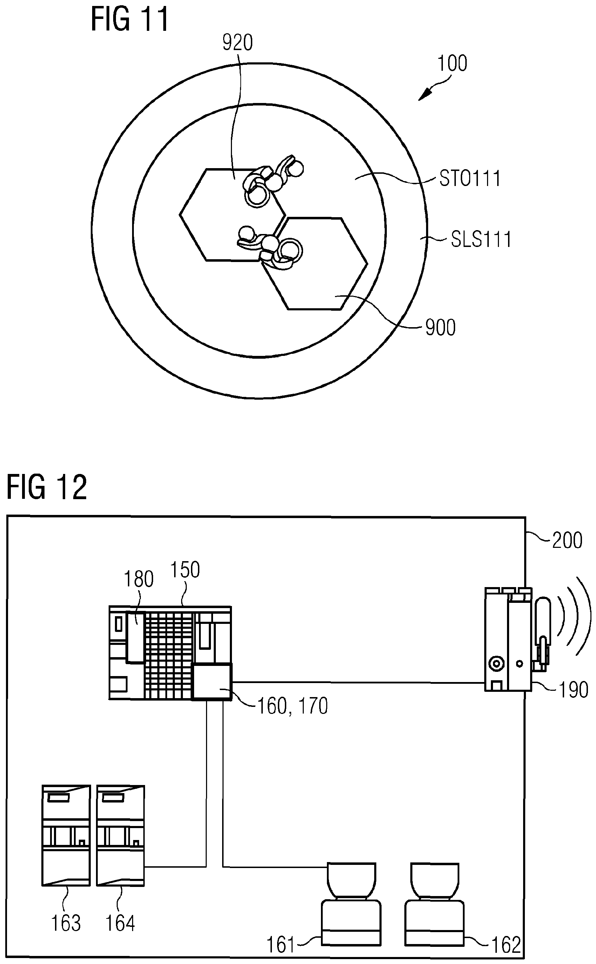

Nach fehlersicherem Erkennen des AMR 900 durch das AMR 920 oder anders herum, wofür die AMRs ausreichend nah voreinander stehen sollten, kann eine Kopplung eingeleitet werden und der Überwachungsfall der Sensorik gewechselt werden. Figur 11 zeigt die AMRs 900, 920 als gekoppeltes fehlersicheres Gesamtsystem 100 mit gemeinsamen angepassten Überwachungsbereichen STO111, SLS111, in welchen sie ihren Auftrag durchführen können. Dabei gleichen die Sicherheitssensoren des einen AMR die durch ihn aus Sicht des anderen AMR verdeckten Sicherheitsbereiche, die aufgrund des anderen AMRs nötig sind, aus und umgekehrt.

Die aus den angepassten Überwachungsbereichen gebildeten Schutzzonen setzen sich wiederum aus einzelnen Feldern zusammen, die sich hinsichtlich ihrer Geometrie aufgrund der Sensorik ergeben. Je nach Anzahl der verbauten Sensoren und der dadurch aufgrund der jeweiligen Sicherheitseinheiten der AMRs überwachbaren Felder ergeben sich kreisförmige angepasste Überwachungsbereiche wie in Figur 11 dargestellt oder komplexere Geometrien wie in dem Ausführungsbeispiel von Figur 5 veranschaulicht. Die in Figur 11 dargestellten kreisförmigen Überwachungsbereiche sind insbesondere mit mehreren, an den jeweiligen Außenkanten des AMRs angebrachten Sensoren realisierbar.

Es erfolgt insbesondere keine reine Überlagerung der je AMR separat vorgesehenen Überwachungsbereiche, sondern die gemeinsamen angepassten Überwachungsbereiche sind auf die sich insgesamt durch die gekoppelten AMRs ergebende Gefährdungssituation ausgelegt und berücksichtigen sowohl aufgrund der Kopplung neu entstehende Gefährdungen als auch aufgrund der Kopplung nicht oder nicht mehr benötigte Überwachungen, beispielsweise zwischen den AMRs oder innerhalb der AMRs.

Die Anpassung erfolgt für beide AMRs hinsichtlich Ausgestaltung oder Ausdehnung überwachter Flächen und vorzugsweise auch hinsichtlich einzuleitender Sicherheitsfunktionen je überwachtem und verletztem Überwachungsbereich.

Der gemeinsame innere angepasste Überwachungsbereich STO111 bewirkt beispielsweise eine Momentenfreischaltung oder Safe Torque Off Funktion. Beispielsweise wird ein STO als Sicherheitsfunktion des Überwachungsbereiches STO111 im Stillstand und nach erfolgreicher Kopplung vorgesehen, weil dann eine Bewegung der Manipulatoren auf dem AMR möglich ist. Der äußere angepasste Überwachungsbereich SLS111 ist beispielsweise mit einer sicheren Geschwindigkeitsüberwachung für einen oder beide Manipulatoren 901, 921 belegt, die als Sicherheitsfunktion eingeleitet wird, wenn ein Objekt erkannt wird. In Varianten, in welchen die Manipulatoren 901, 921 technisch nicht ausgestaltet sind, eine sichere Geschwindigkeitsüberwachung zu unterstützen, kann der angepasste Überwachungsbereich auch mit einer Warnfunktion umgesetzt sein, die das Ausgeben eines Alarmsignals bewirkt.

Das Verfahren gemäß dem dritten Ausführungsbeispiel ist nicht auf zwei teilnehmende AMRs beschränkt, sondern kann auch mit mehr als zwei Einheiten angewendet werden, so dass sich mehrere AMRs zum gemeinsamen Bearbeiten einer komplexen Aufgabe zusammenfinden können.

Figur 12 zeigt ein Sicherheitssystem 200, wie es beliebig in einer mobilen Komponente der oben beschriebenen Ausführungsformen einsetzbar ist. Es weist eine Sicherheitseinheit 150, beispielsweise eine fehlersichere PLC, auf mit einer Schnittstelle 160 zu Sensoren 161, 162 auf zum fehlersicheren Bestimmen einer Pose der mobilen Komponente relativ zu einer weiteren Komponente. Außerdem ist eine Kopplungsschnittstelle 170 zum Aufbau einer kommunikativen und fehlersicheren Kopplung zwischen der mobilen Komponente einer weiteren Komponente mittels einer WLAN-Kommunikationsbaugruppe 190 vorgesehen. Es kommt eine beliebige der in den obigen Ausführungsbeispielen beschriebenen weiteren Komponenten in Betracht. Die Kopplungsschnittstelle 170 und die Schnittstellen zur Ansteuerung der sonstigen fehlersicheren Komponenten, insbesondere die Schnittstelle 160 zu den Sensoren sowie eine Schnittstelle zu den Antrieben der mobilen Komponente, sind vorteilhafterweise als gemeinsame Schnittstelle realisiert. Dabei können auch parallele Schnittstellen zum Einsatz kommen, die beispielsweise draht- und kommunikationsbasierte Verbindungen unterstützen.

Es ist ferner eine Überwachungseinheit 180 zum Anpassen eines Überwachungsbereichs der mobilen Komponente bei erfolgreicher Kopplung vorgesehen. Die Sicherheitseinheit 150 ist beispielsweise eine fehlersichere Steuerung mit den genannten integrierten Schnittstellen und der Überwachungseinheit.

Fehlersicher ermittelte Steuerungssignale, die die Sicherheitsfunktionen umsetzen, werden beispielsweise kommunikationstechnisch fehlersicher oder über entsprechende I/O Module an die verschiedenen fehlersicheren Antriebe 163, 164 ausgegeben.

Auf der Sicherheitseinheit 150, insbesondere einer fehlersicheren Steuerung, kann ein Computer-Programmprodukt mit einem Computer-Programm zur Ausführung gebracht werden, das Mittel zur Durchführung des Verfahrens nach einem der oben beschriebenen Ausgestaltungen aufweist. Insbesondere wirkt dafür ein Logikbereich der Überwachungseinheit mit anderen Logikbereichen der Steuerung zusammen.

Obwohl die Erfindung im Detail durch die Ausführungsbeispiele näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Erfindung zu verlassen.

## Patentansprüche

1. Verfahren zum Anpassen einer fehlersicheren Überwachung in einer industriellen Automatisierungsanlage,
wobei mittels eines ersten Sensors (333) einer mobilen Komponente (320) der industriellen Automatisierungsanlage, der einen ersten Überwachungsbereich der mobilen Komponente (320) überwacht, fehlersicher eine Pose der mobilen Komponente (320) relativ zu einer weiteren Komponente (300) der industriellen Automatisierungsanlage bestimmt wird,
wobei ein zweiter Sensor (330) einen zweiten Überwachungsbereich der weiteren Komponente (300) überwacht,
wobei eine kommunikative und fehlersichere Kopplung zwischen der mobilen Komponente (320) und der weiteren Komponente (300) aufgebaut wird,
wobei bei erfolgreicher Kopplung der erste Überwachungsbereich der mobilen Komponente (320) angepasst wird **dadurch gekennzeichnet, dass** bei erfolgreicher Kopplung der zweite Überwachungsbereich der weiteren Komponente (300) angepasst wird.

2. Verfahren nach Anspruch 1, wobei eine Verletzung des angepassten zweiten Überwachungsbereiches (STO321, STO311) der mobilen Komponente (320) ein Einleiten einer Sicherheitsfunktion, insbesondere der mobilen Komponente (320) und/oder der weiteren Komponente (300), bewirkt.

3. Verfahren nach einem der vorstehenden Ansprüche, wobei eine Verletzung des angepassten zweiten Überwachungsbereiches (SLS311) der weiteren Komponente (300) ein Einleiten einer Sicherheitsfunktion, insbesondere der mobilen Komponente (320) und/oder der weiteren Komponente (300), bewirkt.

4. Verfahren nach einem der vorstehenden Ansprüche, wobei der erste Überwachungsbereich der mobilen Komponente (320) angepasst wird in Abhängigkeit von einem bis zur Kopplung aktivierten Sicherheitsbereich der weiteren Komponente (300) oder in Abhängigkeit von einem aufgrund der Kopplung geforderten Sicherheitsbereich der weiteren Komponente (300).

5. Verfahren nach einem der vorstehenden Ansprüche, wobei der erste Überwachungsbereich der mobilen Komponente (320) angepasst wird, indem zuvor von einem zweiten Überwachungsbereich der weiteren Komponente (300) überwachte Bereiche aufgrund der Kopplung durch den ersten Überwachungsbereich der mobilen Komponente (320) überwacht werden.

6. Verfahren nach einem der vorstehenden Ansprüche, wobei der erste Überwachungsbereich der mobilen Komponente (320) angepasst wird, indem zumindest für einen Anteil des Überwachungsbereichs, insbesondere für Bereiche, die mit bis zur Kopplung von einem zweiten Überwachungsbereich der weiteren Komponente (300) überwachten Feldern überlappen, ein Überwachungsmodus, insbesondere eine Sicherheitsfunktion, angepasst, insbesondere ergänzt oder umgeschaltet, wird.

7. Verfahren nach einem der vorstehenden Ansprüche, wobei der zweite Überwachungsbereich der weiteren Komponente (300) angepasst wird, indem ein Bereich in Abhängigkeit von der Position der mobilen Komponente (320) aus der Überwachung durch die weitere Komponente (300) ausgenommen wird.

8. Verfahren nach einem der vorstehenden Ansprüche, wobei der zweite Überwachungsbereich der weiteren Komponente (300) angepasst wird, indem eine Sicherheitseinrichtung zwischen der mobilen Komponente (320) und der weiteren Komponente (300) deaktiviert wird.

9. Verfahren nach einem der vorstehenden Ansprüche, wobei die Pose mittels eines Konturerkennungsverfahrens erkannt wird.

10. Verfahren nach einem der vorstehenden Ansprüche, wobei für das Konturerkennungsverfahrens eine Kontur (360) der weiteren Komponente (300) erkannt wird.

11. Verfahren nach einem der vorstehenden Ansprüche, wobei ein einheitliches Sicherheitslevel, insbesondere ein zertifiziertes Sicherheitslevel, beim Bestimmen der Pose der mobilen Komponente (300), beim Aufbau der kommunikativen und fehlersicheren Kopplung und beim Anpassen des Überwachungsbereichs angewendet wird.

12. Verfahren nach Anspruch 11, wobei ferner auch bei einem Einleiten eines Sicherheitszustands aufgrund einer Verletzung des angepassten Überwachungsbereiches das einheitliche Sicherheitslevel angewendet wird.

13. Verfahren nach einem der vorstehenden Ansprüche, wobei die kommunikative und fehlersichere Kopplung zwischen der mobilen Komponente (320) und der weiteren Komponente (300) dynamisch aufgebaut und beendet wird.

14. Sicherheitssystem (200) mit einer Sicherheitseinheit (150)
umfassend eine Schnittstelle (160) zu einem Sensor zum fehlersicheren Bestimmen einer Pose der mobilen Komponente relativ zu einer weiteren Komponente,
eine Kopplungsschnittstelle (170) zum Aufbau einer kommunikativen und fehlersicheren Kopplung zwischen der mobilen Komponente und der weiteren Komponente,
eine Überwachungseinheit (180) zum Anpassen eines ersten Überwachungsbereichs der mobilen Komponente bei erfolgreicher Kopplung und der zweite Überwachungsbereich der weiteren Komponente (300), wobei das Sicherheitssystem ferner mindestens einen Sensor (161, 162) umfasst,
**dadurch gekennzeichnet, dass**
es Mittel zur Durchführung des Verfahrens nach einem der Patentansprüche 1 bis 13 aufweist.

15. Sicherheitssystem (200) mit einer Sicherheitseinheit (150) nach Anspruch 14, wobei die weitere Komponente eine weitere mobile Komponente ist.

16. Sicherheitssystem (200) mit einer Sicherheitseinheit (150) nach einem der Ansprüche 14 bis 15, wobei die weitere Komponente eine stationäre Komponente ist.

## Claims

1. Method for adjusting failsafe monitoring in an industrial automation plant,
wherein a first sensor (333) of a mobile component (320) of the industrial automation plant, which sensor monitors a first monitoring region of the mobile component (320), is used to determine a pose of the mobile component (320) relative to a further component (300) of the industrial automation plant in a failsafe manner,
wherein a second sensor (330) monitors a second monitoring region of the further component (300),
wherein a communicative and failsafe coupling is set up between the mobile component (320) and the further component (300),
wherein successful coupling results in the first monitoring region of the mobile component (320) being adjusted, **characterized in that** successful coupling results in the second monitoring region of the further component (300) being adjusted.

2. Method according to Claim 1, wherein an intrusion on the adjusted second monitoring region (ST0321, ST0311) of the mobile component (320) brings about initiation of a safety function, in particular of the mobile component (320) and/or of the further component (300).

3. Method according to either of the preceding claims, wherein an intrusion on the adjusted second monitoring region (SLS311) of the further component (300) brings about initiation of a safety function, in particular of the mobile component (320) and/or of the further component (300).

4. Method according to one of the preceding claims, wherein the first monitoring region of the mobile component (320) is adjusted on the basis of a safety region of the further component (300) that is activated up to the coupling or on the basis of a safety region of the further component (300) that is demanded on account of the coupling.

5. Method according to one of the preceding claims, wherein the first monitoring region of the mobile component (320) is adjusted by virtue of regions previously monitored by a second monitoring region of the further component (300) being monitored by the first monitoring region of the mobile component (320) on account of the coupling.

6. Method according to one of the preceding claims, wherein the first monitoring region of the mobile component (320) is adjusted by virtue of a monitoring mode, in particular a safety function, being adjusted, in particular supplemented or switched over, at least for a portion of the monitoring region, in particular for regions that overlap fields monitored by a second monitoring region of the further component (300) up to the coupling.

7. Method according to one of the preceding claims, wherein the second monitoring region of the further component (300) is adjusted by virtue of a region being removed from the monitoring by the further component (300) on the basis of the position of the mobile component (320).

8. Method according to one of the preceding claims, wherein the second monitoring region of the further component (300) is adjusted by virtue of a safety device between the mobile component (320) and the further component (300) being deactivated.

9. Method according to one of the preceding claims, wherein the pose is detected by means of a contour detection method.

10. Method according to one of the preceding claims, wherein a contour (360) of the further component (300) is detected for the contour detection method.

11. Method according to one of the preceding claims, wherein a standard safety level, in particular a certified safety level, is applied when determining the pose of the mobile component (300), when setting up the communicative and failsafe coupling and when adjusting the monitoring region.

12. Method according to Claim 11, wherein the standard safety level is furthermore also applied when initiating a safety state on account of an intrusion on the adjusted monitoring region.

13. Method according to one of the preceding claims, wherein the communicative and failsafe coupling between the mobile component (320) and the further component (300) is set up and terminated dynamically.

14. Safety system (200) having a safety unit (150)
comprising an interface (160) to a sensor for determining a pose of the mobile component relative to a further component in a failsafe manner,
a coupling interface (170) for setting up a communicative and failsafe coupling between the mobile component and the further component,
a monitoring unit (180) for adjusting a first monitoring region of the mobile component in the event of successful coupling and the second monitoring region of the further component (300), the safety system further comprising at least one sensor (161, 162), **characterized in that**
it comprises means for performing the method according to one of Patent Claims 1 to 13.

15. Safety system (200) having a safety unit (150) according to Claim 14, wherein the further component is a further mobile component.

16. Safety system (200) having a safety unit (150) according to either of Claims 14 and 15, wherein the further component is a stationary component.

## Revendications

1. Procédé d'ajustement d'une surveillance sans erreur dans une installation d'automatisation industrielle,
dans lequel une position du composant mobile (320) par rapport à un composant supplémentaire (300) de l'installation d'automatisation industrielle est déterminée de manière fiable au moyen d'un premier capteur (333) d'un composant mobile (320) de l'installation d'automatisation industrielle, ledit premier capteur surveillant une première région de surveillance du composant mobile (320),
dans lequel un deuxième capteur (330) surveille une deuxième région de surveillance du composant supplémentaire (300),
dans lequel un couplage de communication sans erreur est établi entre le composant mobile (320) et le composant supplémentaire (300),
dans lequel la première région de surveillance du composant mobile (320) est ajustée lorsque le couplage est réussi, **caractérisé en ce que** la deuxième région de surveillance du composant supplémentaire (300) est ajustée lorsque le couplage est réussi.

2. Procédé selon la revendication 1, dans lequel une violation de la deuxième région de surveillance (ST0321, STO311) ajustée du composant mobile (320) provoque l'activation d'une fonction de sécurité, en particulier du composant mobile (320) et/ou du composant supplémentaire (300).

3. Procédé selon l'une quelconque des revendications précédentes, dans lequel une violation de la deuxième région de surveillance (SLS311) ajustée du composant supplémentaire (300) provoque l'activation d'une fonction de sécurité, en particulier du composant mobile (320) et/ou du composant supplémentaire (300).

4. Procédé selon l'une quelconque des revendications précédentes, dans lequel la première région de surveillance du composant mobile (320) est ajustée en fonction d'une région de sécurité, activée jusqu'au couplage, du composant supplémentaire (300) ou en fonction d'une région de sécurité, requise en raison du couplage, du composant supplémentaire (300).

5. Procédé selon l'une quelconque des revendications précédentes, dans lequel la première région de surveillance du composant mobile (320) est ajustée en surveillant, grâce à la première région de surveillance du composant mobile (320), le couplage de régions précédemment surveillées par une deuxième région de surveillance du composant supplémentaire (300).

6. Procédé selon l'une quelconque des revendications précédentes, dans lequel la première région de surveillance du composant mobile (320) est ajustée en ajustant, en particulier en complétant ou en commutant, un mode de surveillance, en particulier une fonction de sécurité, au moins pour une partie de la région de surveillance, en particulier pour les régions chevauchant des champs surveillés par une deuxième région de surveillance du composant supplémentaire (300) jusqu'au couplage.

7. Procédé selon l'une quelconque des revendications précédentes, dans lequel la deuxième région de surveillance du composant supplémentaire (300) est ajustée en excluant une région de la surveillance par le composant supplémentaire (300) en fonction de la position du composant mobile (320).

8. Procédé selon l'une quelconque des revendications précédentes, dans lequel la deuxième région de surveillance du composant supplémentaire (300) est ajustée en désactivant un dispositif de sécurité entre le composant mobile (320) et le composant supplémentaire (300).

9. Procédé selon l'une quelconque des revendications précédentes, dans lequel la position est détectée grâce à un procédé de détection de contours.

10. Procédé selon l'une quelconque des revendications précédentes, dans lequel un contour (360) du composant supplémentaire (300) est détecté pour servir le procédé de détection de contours.

11. Procédé selon l'une quelconque des revendications précédentes, dans lequel un niveau de sécurité uniforme, en particulier un niveau de sécurité certifié, est appliqué lors de la détermination de la position du composant mobile (300), lors de l'établissement du couplage de communication sans erreur et lors de l'ajustement de la région de surveillance.

12. Procédé selon la revendication 11, dans lequel le niveau de sécurité uniforme est également appliqué en cas d'activation d'un état de sécurité résultant d'une violation de la région de surveillance ajustée.

13. Procédé selon l'une quelconque des revendications précédentes, dans lequel le couplage de communication sans erreur entre le composant mobile (320) et le composant supplémentaire (300) est établi et achevé de manière dynamique.

14. Système de sécurité (200) avec une unité de sécurité (150), comprenant une interface (160) relative à un capteur permettant de déterminer sans erreur une position du composant mobile par rapport à un composant supplémentaire,
une interface de couplage (170) permettant d'établir un couplage de communication sans erreur entre le composant mobile et le composant supplémentaire,
une unité de surveillance (180) permettant d'ajuster une première région de surveillance du composant mobile, lorsque le couplage est réussi, et la deuxième région de surveillance du composant supplémentaire (300), dans lequel le système de sécurité comprend en outre au moins un capteur (161, 162),
**caractérisé en ce que**
ledit système de sécurité présente des moyens de mise en œuvre du procédé selon l'une quelconque des revendications 1 à 13.

15. Système de sécurité (200) avec une unité de sécurité (150) selon la revendication 14, dans lequel le composant supplémentaire est un composant mobile supplémentaire.

16. Système de sécurité (200) avec une unité de sécurité (150) selon l'une quelconque des revendications 14 à 15, dans lequel le composant supplémentaire est un composant stationnaire.
